# DEMANDE DE BREVET EUROPEEN

(11) **EP 1 197 307 A1**
(43) Date de publication de la demande: **17.04.2002**
(21) Numéro de dépôt: 01402619.9
(22) Date de dépôt: 10.10.2001
(51) Int. Cl.: B26F 3/00, B26D 7/06, B26D 7/01, B26D 5/00, A23N 15/04, B26D 7/27, B65G 47/20, B26D 3/30, B26D 7/26

(54) **Dispositif de coupe avec moyens de guidage du produit, notamment pour sectionner les endives**

(30) Priorité: 10.10.2000 FR 0012931
(71) Demandeur: Capelle, 80800 Cayeux en Santerre (FR)
(72) Inventeur: Capelle, Hubert Joseph Jules, 80110 Beaucourt en Santerre (FR); Lanciaux, Marc Jean Jacques, 47390 Layrac (FR)
(74) Mandataire: Bonnetat, Christian

(57) **Abrégé**

Dispositif de coupe (1) pour les végétaux (20) constitués chacun d'une pousse feuillue (21) et d'une racine (22), reliées l'une à l'autre par un collet (23) de section rétrécie, ledit dispositif étant destiné à sectionner lesdits végétaux pour séparer lesdites pousses feuillues desdites racines,

caractérisé en ce qu'il comporte:
- un transporteur (2), constitué de deux voies de transport (3,4) parallèles avançant dans le même sens et à la même vitesse, lesdites voies étant espacées latéralement l'une de l'autre pour ménager un espace vide longitudinal (6) entre elles et lesdits végétaux (20) étant disposés sur ledit transporteur de façon au moins approximativement transversale à celui-ci, avec leurs racines sur l'une desdites voies et leurs pousses feuillies sur l'autre de celle-ci, de manière que les collets (23) desdits végétaux (20) le long desquelles ceux-ci doivent être sectionnés se trouvent à l'aplomb dudit vide (6) entre lesdites voies (3,4);
- un appareil de coupe à jet liquide sous pression (11) auquel lesdits végétaux sont amenés par ledit transporteur, ledit appareil de coupe (11) étant apte à adresser son jet de coupe (11A) dans ledit espace vide longitudinal (6) entre lesdites voies (3,4); et
- des moyens de guidage et de centrage (7,8) coopérant avec lesdits collets (23) desdits végétaux (20) et communiquant à ceux-ci une position précise en regard dudit appareil de coupe (11).

## Description

La présente invention concerne un dispositif de coupe, notamment destiné à sectionner les endives ou végétaux analogues.

Bien qu'elle soit particulièrement appropriée à la préparation des endives en vue de leur commercialisation, la présente invention n'est pas limitée, comme cela apparaîtra clairement de la suite de la présente description, à cette application et peut être utilisée dans de nombreux autres domaines. Cependant, à des fins d'explication, elle sera plus particulièrement décrite ci-après dans son application particulière aux endives.

On sait que la partie comestible d'une endive, encore appelée chicon, est une pousse feuillue qui se développe à partir d'une racine, elle-même non comestible, le chicon étant relié à la racine par une partie rétrécie, appelée collet.

Aussi, avant commercialisation, est-il nécessaire de sectionner lesdites endives pour séparer les chicons des racines.

Une telle séparation s'effectue généralement par coupe ou cassage manuel au niveau du collet ou par coupe mécanique, également au niveau dudit collet. Il en résulte un ensemble de blessures et de perturbations biologiques pour les chicons dues à l'écrasement et/ou au cisaillement qu'ils subissent lors de cette séparation, ce qui nuit à leur qualité. De plus, lors d'une telle séparation, les sections de coupe desdits chicons risquent d'être contaminés par des bactéries, des champignons, etc ... au contact des outils de coupe et des racines, ce qui réduit la durée de conservation des chicons et nuit à leur présentation. Par ailleurs, bien que la séparation soit effectuée usuellement au niveau du collet, il peut se faire que, parfois, il serait plus avantageux de sectionner les endives à un autre endroit. Enfin, les coupes obtenues sont généralement imprécises et notamment obliques, de sorte qu'il est nécessaire de procéder, après la séparation des chicons et des racines, à une opération complémentaire de coupe destinée à parer lesdits chicons, c'est-à-dire à éliminer totalement les collets ainsi que les feuilles périphériques flétries et/ou endommagées. A cet effet, on a l'habitude de couper quelques millimètres de la base des chicons, ce qui permet de ne garder que la partie interne présentable desdits chicons.

Mais, au cours de cette opération complémentaire, on risque de nouveau de contaminer lesdits chicons. De plus, pour être sûr que les parties conservées des chicons seront parfaitement présentables, les opérateurs ont tendance à couper trop largement la base des chicons, de sorte qu'il en résulte des pertes importantes de produits qui seraient commercialisables.

L'objet de la présente invention est non seulement de remédier à ces inconvénients, mais encore de réaliser un dispositif de coupe présentant de nombreux avantages par rapport à ceux de la technique connue.

A cette fin, selon l'invention, le dispositif de coupe pour des végétaux constitués chacun d'une pousse feuillue et d'une racine, à partir de laquelle s'est développée ladite pousse feuillue, ledit dispositif étant destiné à sectionner lesdits végétaux pour séparer lesdites pousses feuillues desdites racines, est remarquable en ce qu'il comporte :
- un transporteur, constitué de deux voies de transport parallèles avançant dans le même sens et à la même vitesse, lesdites voies étant espacées latéralement l'une de l'autre pour ménager un espace vide longitudinal entre elles et lesdits végétaux étant disposés sur ledit transporteur de façon au moins approximativement transversale à celui-ci, avec leurs racines sur l'une desdites voies et leurs pousses feuillues sur l'autre de celles-ci, de manière que les zones desdits végétaux le long desquelles ceux-ci doivent être sectionnés se trouvent à l'aplomb dudit vide entre lesdites voies ; et
- un appareil de coupe à jet liquide sous pression auquel lesdits végétaux sont amenés par ledit transporteur, ledit appareil de coupe étant apte à adresser son jet de coupe dans ledit espace vide longitudinal entre lesdites voies.

Ainsi, grâce à la présente invention :
- les végétaux ne subissent aucun écrasement, ni cisaillement, puisque la coupe est effectuée par un jet liquide (eau) sous pression ;
- la coupe n'est pas contaminante pour les végétaux, puisque le dispositif de coupe ne comporte plus d'organe mécanique successivement au contact desdits végétaux ; au contraire, grâce à l'invention, l'opération de coupe peut être aseptisante et anti-oxydante, car il suffit d'ajouter au liquide de coupe un additif approprié ;
- puisque le transporteur comporte deux voies de transport, il est possible d'en réserver une pour toutes les racines et l'autre pour toutes les pousses feuillues, de sorte que ces dernières ne peuvent être contaminées et salies par les racines ;
- les coupes sont franches, nettes, précises et bien perpendiculaires à la direction longitudinale des végétaux ; et
- la cadence de coupe peut être élevée.

De préférence, le dispositif de coupe conforme à la présente invention comporte des moyens de guidage et de centrage pour communiquer aux végétaux une position précise en regard dudit appareil de coupe à jet liquide. Dans le cas général où lesdits végétaux comportent un collet de section rétrécie, reliant ladite pousse feuillue à la racine correspondante, il est avantageux que ces moyens de guidage et de centrage comportent une rampe fixe disposée dans le vide longitudinal entre les voies de transport et coopérant avec le collet desdits végétaux. On peut alors prévoir des vibreurs à haute fréquence, destinés à vibrer au moins l'une desdites voies de transport, de façon à faire glisser lesdits végétaux en direction de ladite rampe, pour que le collet de ceux-ci soit constamment appliqué contre ladite rampe pendant l'avance desdits végétaux le long desdites voies de transport.

Avantageusement, la position du jet liquide dudit appareil de coupe est réglable à l'intérieur dudit espace vide, transversalement audit transporteur. Ainsi, un opérateur actionnant ledit appareil de coupe peut choisir la section de coupe la plus avantageuse pour séparer les pousses feuillues des racines. Par exemple, il peut ainsi choisir la section de coupe pour permettre le parage aisé des pousses feuillues, ou bien encore pour supprimer éventuellement toute nécessité de parer ultérieurement lesdites pousses feuillues.

Pour aider ledit opérateur à choisir l'emplacement de ladite section de coupe, le dispositif conforme à la présente invention peut comporter une caméra prenant une image du végétal en cours de sectionnement. Cette caméra peut être associée à un dispositif d'affichage sur lequel apparaissent, en superposition, l'image du végétal en cours de préparation pour le sectionnement et une ligne de coupe optimale. Cette ligne de coupe optimale peut résulter de la comparaison de ladite image du végétal en cours de sectionnement avec une base de données dans laquelle sont répertoriées les différentes morphologies possibles pour ledit végétal et les lignes de coupe optimales correspondant à chacune desdites morphologies.

Eventuellement, à partir de ladite image donnée par la caméra et des informations contenues dans ladite base de données, on peut commander automatiquement la position du jet liquide de l'appareil de coupe pour sectionner ledit végétal le long d'une section de coupe optimale.

Ainsi, on notera que la présente invention permet de choisir un plan de coupe avantageux, éventuellement différent du repère naturel constitué par le collet. De plus, le sectionnement s'effectue sans écrasement du végétal entraînant un décollement incontrôlé important des feuilles périphériques en proximité de la coupe. Il en résulte un important gain de productivité par rapport aux techniques connues.

Par ailleurs, en amont dudit appareil de coupe, on dispose avantageusement un dispositif de lavage par pulvérisation de la zone de sectionnement dudit végétal, éventuellement suivi d'un dispositif de séchage de ladite zone.

Les figures du dessin annexé feront bien comprendre comment l'invention peut être réalisée. Sur ces figures, des références identiques désignent des éléments semblables.

La figure 1 est une vue en plan, schématique et partielle, d'un exemple de réalisation du dispositif de coupe conforme à la présente invention.

La figure 2 est une vue en élévation, schématique et partielle, du dispositif de coupe de la figure 1.

Les figures 3 et 4 sont des vues transversales, à plus grande échelle, du dispositif de coupe des figures 1 et 2, correspondant respectivement aux lignes de coupe III-III et IV-IV de la figure 1.

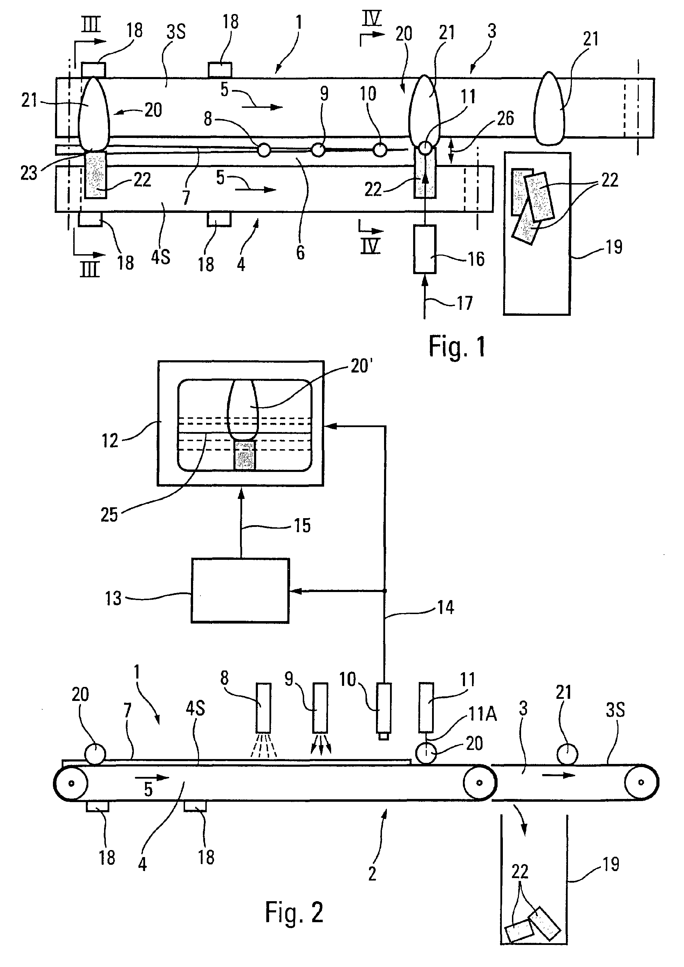

Le dispositif de coupe 1, conforme à la présente invention et illustré schématiquement et partiellement sur les figures 1 et 2, comporte un transporteur 2 constitué de deux bandes de transport sans fin 3 et 4, passant sur des rouleaux d'extrémité. Lesdites bandes de transport 3 et 4 sont parallèles et leurs brins supérieurs 3S et 4S avancent dans le même sens et à la même vitesse, comme cela est schématisé par les flèches 5.

De plus, les bandes de transport 3 et 4 sont espacées latéralement l'une de l'autre et elles ménagent entre elles un espace vide longitudinal 6. Dans ce dernier est prévue une rampe de centrage longitudinale 7 faisant saillie au-dessus des brins supérieurs 3S et 4S des bandes de transport 3 et 4. A l'aplomb dudit espace vide sont disposés, d'amont en aval par rapport au sens d'avance 5 des brins supérieurs 3S et 4S des bandes de transport 3 et 4, un dispositif de pulvérisation 8, un dispositif de soufflage 9, une caméra 10 et un appareil de coupe à jet d'eau 11, dont ledit jet d'eau porte la référence 11A.

Comme cela est visible sur la figure 2, la caméra 10 est reliée en parallèle à un dispositif d'affichage 12 et à une base de données 13, par une liaison 14, ladite base de données 13 étant elle-même reliée audit dispositif d'affichage 12 par une liaison 15.

Par ailleurs, comme on peut le voir sur la figure 1, la position du jet d'eau 11A de l'appareil de coupe 11 est réglable transversalement à l'espace longitudinal 6, grâce à un dispositif de réglage 16, commandé en 17 par un opérateur (non représenté).

Le dispositif de coupe 1 comporte de plus des vibreurs 18 aptes à vibrer les brins supérieurs 3S et 4S des bandes de transport 3 et 4, ainsi qu'un bac de réception 19 disposé sous l'extrémité aval de la bande de transport 4.

Ce dispositif de coupe est destiné à des végétaux 20, tels que les endives, comportant chacun une pousse feuillue 21, appelée chicon pour les endives, solidaire d'une racine 22, généralement par l'intermédiaire d'une zone rétrécie 23, encore appelée collet. Plus particulièrement, le dispositif 1 est destiné à séparer par coupe les pousses feuillues 21 des racines 22, à l'emplacement des collets 23, en avant des renflements 22R desdites racines 22 du côté desdits collets 23.

Pour ce faire, du côté amont du transporteur 2, les végétaux 20 sont placés successivement sur les brins supérieurs 3S et 4S des bandes de transport 3 et 4, transversalement à ces dernières, de façon que leurs pousses feuillues 21 reposent sur le brin supérieur 3S de la bande de transport 3, que leurs racines 22 reposent sur le brin supérieur 4S de la bande de transport 4 et que leurs zones intermédiaires incluant le collet 23 se trouvent à l'aplomb de l'espace longitudinal vide 6.

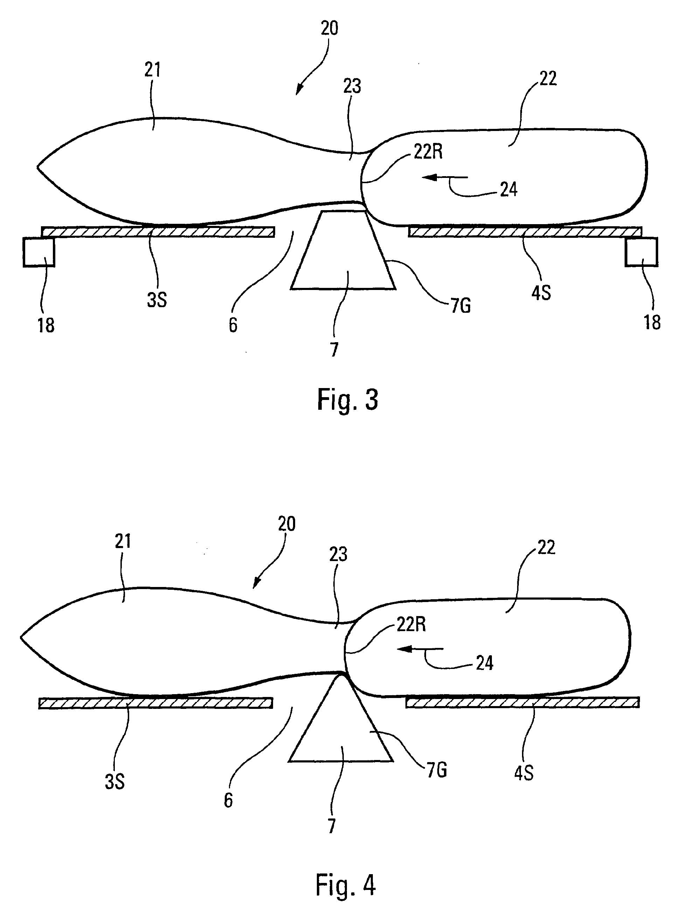

Comme le montrent à plus grande échelle les figures 3 et 4, la rampe de centrage 7 comporte une face de guidage 7G contre laquelle est constamment appuyé le renflement 22R des racines 22 grâce à l'action des vibreurs 18. Sur les figures 3 et 4, cette action est symbolisée par la flèche 24. Ainsi, au cours de leur avance vers l'extrémité aval du transporteur 2, les végétaux 20 occupent des positions transversalement déterminées par rapport audit transporteur, et donc par rapport aux différents dispositifs 8 à 11.

Les végétaux, ainsi déplacés longitudinalement (flèches 5) par les bandes de transport 3 et 4 et centrés transversalement (flèche 24) par les vibreurs 18 et la rampe 17, passent successivement d'abord à l'aplomb du dispositif de pulvérisation 8, qui nettoie les collets 23, par exemple à l'aide d'une solution d'un produit bactéricide, puis sous le dispositif de soufflage 9, qui sèche lesdits collets. Ensuite, chaque végétal 20 arrive sous la caméra 10, qui en forme une image au moins partielle 20' sur le dispositif d'affichage 12, ladite image 20' représentant au moins la zone intermédiaire incluant le collet 23.

Par ailleurs, sur ledit dispositif d'affichage 12 s'affiche une ligne de coupe prédéterminée avantageuse 25, choisie parmi une pluralité d'autres (représentées en pointillés) à partir de la base de données 13. En effet, celle-ci contient en mémoire tous les types de morphologie possibles pour lesdits végétaux 20, ou au moins un grand nombre de ces types, et, pour chaque type, l'emplacement le plus avantageux, antérieurement déterminé par l'expérience, de la ligne de coupe pour séparer la pousse feuillue 21 de la racine 22.

En conséquence, l'opérateur règle la position transversale du jet liquide (11A) de l'appareil de coupe 11 dans l'espace vide 6 (double flèche 26) en actionnant, par l'organe 17, le dispositif de réglage 16 dudit appareil de coupe 1, afin que la ligne de coupe réelle, effectuée par le jet d'eau 11A sur le végétal 20, coïncide avec la ligne de coupe prédéterminée correspondante 25.

Chaque végétal 20 passant sous l'appareil de coupe 11 est donc sectionné de façon franche et nette, à l'emplacement le plus avantageux.

Après sectionnement d'un végétal 20 par l'appareil de coupe 11, la pousse feuillue 21 de celui-ci est dirigée par la bande de transport 5 vers un poste de vérification et, éventuellement, d'effeuillage supplémentaire, puis vers un poste d'emballage. En revanche, la racine coupée, sans intérêt alimentaire, est déversée dans le bac 19 par la bande 4.

On comprendra aisément que, à partir de l'image 20' délivrée par la caméra 10 et des informations contenues dans la base de données 13, on peut aisément, en variante, commander automatiquement, sans intervention d'un opérateur, la position du jet liquide 11A de l'appareil de coupe 11 afin de sectionner le végétal 20 le long de la section de coupe optimale 25.

## Revendications

1. Dispositif de coupe (1) pour des végétaux (20) constitués chacun d'une pousse feuillue (21) et d'une racine (22), reliées l'une à l'autre par un collet (23) de section rétrécie, ledit dispositif étant destiné à sectionner lesdits végétaux pour séparer lesdites pousses feuillues desdites racines,
**caractérisé en ce qu'**il comporte :
- un transporteur (2), constitué de deux voies de transport (3, 4) parallèles avançant dans le même sens et à la même vitesse, lesdites voies étant espacées latéralement l'une de l'autre pour ménager un espace vide longitudinal (6) entre elles et lesdits végétaux (20) étant disposés sur ledit transporteur de façon au moins approximativement transversale à celui-ci, avec leurs racines sur l'une desdites voies et leurs pousses feuillues sur l'autre de celles-ci, de manière que les collets (23) desdits végétaux (20) le long desquels ceux-ci doivent être sectionnés se trouvent à l'aplomb dudit vide (6) entre lesdites voies (3, 4) ;
- un appareil de coupe à jet liquide sous pression (11) auquel lesdits végétaux sont amenés par ledit transporteur, ledit appareil de coupe (11) étant apte à adresser son jet de coupe (11A) dans ledit espace vide longitudinal (6) entre lesdites voies (3, 4) ; et
- des moyens de guidage et de centrage (7, 18) coopérant avec lesdits collets (23) desdits végétaux (20) et communiquant à ceux-ci une position précise en regard dudit appareil de coupe (11).

2. Dispositif de coupe selon la revendication 1,
**caractérisé en ce que** lesdits moyens de guidage et de centrage comportent une rampe fixe (7), disposée dans le vide longitudinal (6) entre lesdites voies de transport (3, 4).

3. Dispositif de coupe selon la revendication 2,
**caractérisé en ce que** lesdits moyens de guidage et de centrage comportent de plus au moins un vibreur à haute fréquence (18), vibrant au moins l'une desdites voies de transport (3, 4), de façon à faire glisser lesdits végétaux (22) en direction de ladite rampe (7), pour appliquer constamment le collet desdits végétaux contre cette dernière, pendant l'avance desdits végétaux le long desdites voies de transport (3, 4).

4. Dispositif de coupe selon l'une des revendications 1 à 3,
**caractérisé en ce que** la position du jet liquide (11A) dudit appareil de coupe (11) est réglable à l'intérieur dudit espace vide (6), transversalement audit transporteur (2).

5. Dispositif de coupe selon la revendication 4,
**caractérisé en ce qu'**il comporte une caméra (10) prenant une image (20') du végétal (20) en cours de sectionnement.

6. Dispositif de coupe selon la revendication 5,
**caractérisé en ce qu'**il comporte un dispositif d'affichage (12) sur lequel apparaissent, en superposition, l'image (20') du végétal (20) en cours de sectionnement et une ligne de coupe optimale (25).

7. Dispositif de coupe selon la revendication 6,
**caractérisé en ce que** ladite ligne de coupe optimale (25) résulte de la comparaison de ladite image (20') en cours de sectionnement avec une base de données (13) dans laquelle sont répertoriées les différentes morphologies possibles pour ledit végétal et les lignes de coupe optimales correspondant à chacune desdites morphologies.

8. Dispositif de coupe selon la revendication 5,
**caractérisé en ce qu'**il comporte une base de données (13) dans laquelle sont répertoriées les différentes morphologies possibles pour ledit végétal et les lignes de coupe optimales correspondant à chacune desdites morphologies, pour commander automatiquement la position dudit jet liquide (11A) de l'appareil de coupe (11) afin de sectionner ledit végétal le long d'une section de coupe optimale.

9. Dispositif de coupe selon l'une des revendications 1 à 8,
**caractérisé en ce que**, en amont dudit appareil de coupe, on dispose un dispositif de lavage par pulvérisation (8) de la zone de sectionnement (23) dudit végétal (20).

10. Dispositif de coupe selon la revendication 9,
**caractérisé en ce que**, entre ledit dispositif de lavage (8) et ledit appareil de coupe (11), est disposé un dispositif de séchage (9) de ladite zone de sectionnement (23).
